# EUROPÄISCHE PATENTSCHRIFT

(11) **EP 3 529 224 B1**
(45) Veröffentlichungstag und Bekanntmachung des Hinweises auf die Patenterteilung: **29.07.2020**
(21) Anmeldenummer: 17805110.8
(22) Anmeldetag: 07.11.2017
(51) Int. Cl.: C04B 35/10, C04B 35/00, C04B 111/00

(54) **FEUERFESTFORMKÖRPER UND VERFAHREN ZU DESSEN HERSTELLUNG**
REFRACTORY SHAPED BODY AND PRODUCTION PROCESS THEREOF
CORPS EN FORME RÉFRACTAIRE ET PROCÉDÉ DE FABRICATION DE CELUI-CI

(30) Priorität: 25.01.2017 DE 102017201185
(43) Veröffentlichungstag der Anmeldung: 28.08.2019
(73) Patentinhaber: Siemens Aktiengesellschaft, 80333 München (DE)
(72) Erfinder: BUCHAL, Tobias, 40489 Düsseldorf (DE); HENSCHEL, Elke, 45481 Mülheim an der Ruhr (DE); KLIESCH, Simon, 42781 Haan (DE); NIKASCH, Christian, 45478 Mülheim an der Ruhr (DE); PAUL, Uwe, 40882 Ratingen (DE); QIAN, Kang, 45479 Mülheim an der Ruhr (DE); SCHAUFLER, Alexander, 45149 Essen (DE); WILKE, Martin, 45276 Essen (DE)
(86) Internationale Anmeldenummer: PCT/EP2017/078422
(87) Internationale Veröffentlichungsnummer: WO 2018/137803

(56) Entgegenhaltungen:
- DE-U1- 29 624 470
- GB-A- 2 055 787
- US-A1- 2017 234 216

## Beschreibung

Die Erfindung betrifft einen Feuerfestformkörper sowie ein Verfahren zu dessen Herstellung.

Feuerfestformköper, wie beispielsweise keramische Hitzeschilde, können in Brennkammern als Thermobarriere eingesetzt werden. Dabei unterliegen Hitzeschilde hohen thermo-mechanischen, chemischen und erosiven Beanspruchungen. Üblicherweise werden keramische Hitzeschilde im Schlickergussverfahren hergestellt und danach gesintert. Zusätzlich können sie eine keramische Schutzbeschichtung erhalten, um die Korrosion (z.B. von Mullitanteilen im Hitzeschild) zu verhindern.

Aufgrund von Temperaturgradienten im keramischen Hitzeschild delaminiert diese Schicht oft schon nach kurzer Zeit im Gasturbinenbetrieb. Ohne Schicht tritt am keramischen Hitzeschild erhöhte Heißgaskorrosion und anschließende Erosion auf. Die sich dabei ablösenden Partikel werden in Richtung Turbine beschleunigt und können dort zu Beschädigungen an den Beschichtungssystemen der Turbinenschaufeln, vor allem an den Beschichtungssystemen, führen. Insbesondere die herausgelösten Partikel der keramischen Hitzeschilde mit einer Größe von über 1 mm führen dabei zu einer Beschädigung der Turbinenschaufel-Wärmedämmschichten (TBC=thermal barrier coating). Typischer Weise liegt die Korngröße der im Stand der Technik verwendeten Partikel bei bis zu 3mm, kann aber auch größer sein. Diese Partikelgrößen sind notwendig, um dem Keramikmaterial die benötigte Thermoschockbeständigkeit zu verleihen.

Aufgabe der Erfindung ist es, einen gegenüber dem Stand der Technik verbesserten Feuerfestformkörper mit erhöhter Lebensdauer und verringertem Beschädigungspotential für nachgeordnete Bauteile bereitzustellen, der zugleich möglichst einfach und kostengünstig herzustellen ist.

Diese Aufgabe wird bei einem Feuerfestformkörper mit einer Heißseite und einer der Heißseite gegenüberliegenden Kaltseite, dadurch gelöst, dass der Feuerfestformkörper einen ersten Werkstoff mit keramischen Hohlkugelstrukturen umfasst, wobei eine Menge von Hohlkugelstrukturen von der Heißseite zur Kaltseite abnimmt.

Die Hauptschädigung der thermischen Schutzschichten der Turbinenschaufeln erfolgt durch die vergleichsweise größeren Partikel, die sich im Anlagenbetrieb aus dem keramischen Hitzeschild herauslösen können. Dabei kann es sich beispielsweise um Sinterkorund mit Durchmessern zwischen 1 und 3 mm handeln. Aus Sicht des Schutzes der Turbinenschaufelbeschichtung ist es daher wünschenswert, möglichst kleine, oder wenn dies beispielsweise aus Gründen der Thermoschockbeständigkeit nicht möglich ist, möglichst leichte Korundpartikel zu verwenden. Damit wird nach dem möglichen Herauslösen dieser Partikel aus der Oberfläche der keramischen Hitzeschilde und Transport im Gasstrom die Impulskraft beim Aufschlagen auf die thermische Beschichtung der stromabliegenden Turbinenschaufeln ebenfalls reduziert und das Risiko deren Beschädigung verringert.

Der Einsatz von keramischen Hohlkugelstrukturen als zumindest teilweiser Ersatz der bisher verwendeten z.B. größeren Partikel der gesinterten Strukturen bringt hier eine deutliche Verbesserung, da Hohlkugelstrukturen eine geringere Dichte als vergleichbar große herkömmliche Partikel in den gesinterte Strukturen aufweisen. Löst sich ein Partikel oder Teil eines Partikels mit einer Hohlkugelstruktur vom keramischen Hitzeschild, schlägt er mit weniger Wucht (weniger Gewicht, weniger Energie, weniger Impulskraft, Plastifizierung der Hohlstrukturpartikel) auf der Turbinenschaufeloberfläche ein und verursacht daher entweder keinen oder zumindest einen geringeren Schaden an deren thermischer Schutzschicht als ein vergleichbar großer massiver Keramikpartikel.

In einer vorteilhaften Ausführungsform der Erfindung besteht der Feuerfestformkörper aus einem ersten Werkstoff mit keramischen Hohlkugelstrukturen. Gegenüber der Verwendung mehrerer Werkstoffe bringt dies beim Herstellungsprozess den Vorteil mit sich, dass eben nur ein einziger Werkstoff verarbeitet werden muss. Allerdings muss dann durch geeignete Maßnahmen für die Gradierung innerhalb des Formkörpers gesorgt werden.

In einer alternativen Ausführungsform der Erfindung umfasst der Feuerfestformkörper neben dem ersten Werkstoff mit keramischen Hohlkugelstrukturen einen zweiten Werkstoff mit gesinterten Strukturen, wobei sich erster und zweiter Werkstoff dadurch unterscheiden, dass ein gesinterter Rohstoff einer Partikelgröße im zweiten Werkstoff durch einen Rohstoff mit Hohlkugelstrukturen der gleichen Partikelgröße und der gleichen Partikelgrößenverteilung im ersten Werkstoff ersetzt ist. Dadurch wird die Korngrößenverteilung im Feuerfestformkörper nicht verändert.

Aus diesem Grund ist es zweckmäßig, wenn die übrigen Rohstoffe der ersten und zweiten Werkstoffe übereinstimmen. Die Unterschiede bezüglich des Aufbaus in den verwendeten Werkstoffen sind dadurch minimal.

In einer weiteren vorteilhaften Ausführungsform sind die Hohlkugelstrukturen vor einem Vergießen zum Feuerfestformkörper zumindest teilweise zerbrochen. Dies erfolgt vorsätzlich und hat den Effekt, dass sich durch die teilweise gebrochenen Hohlkugelpartikel bessere Anhaftungspunkte (z.B. bessere Verklammerung) für die umgebende Matrix des Feuerfestformkörpers, also des keramischen Hitzeschilds, und somit eine verbesserte Gefügeanbindung im Vergleich zu sphärischen Hohlkugelstrukturen ergibt. Dies bewirkt eine bessere Strukturfestigkeit bei erhöhten Temperaturen und/oder Temperaturgradienten.

Es ist vorteilhaft, wenn die Hohlkugelstrukturen Hohlkugelkorund umfassen. Es ist ferner vorteilhaft, wenn die gesinterten Strukturen Sinterkorund umfassen. Dieses Aluminiumoxid ist sehr temperatur- und korrosionsbeständig und weist ein gutes Verschleißverhalten auf.

In diesem Zusammenhang ist es daher zweckmäßig, wenn dieses Material mit einem nennenswerten Anteil im Feuerfestformkörper vorhanden ist, insbesondere ist es vorteilhaft, wenn der Gewichtsanteil von Sinterkorund im zweiten Werkstoff 30% der festen Bestandteile des zweiten Werkstoffs übersteigt.

Die auf ein Verfahren gerichtete Aufgabe wird gelöst durch ein Verfahren zum Herstellen eines Feuerfestformkörpers, bei dem ein erster Werkstoff mit keramischen Hohlkugelstrukturen in eine Gussform eingefüllt wird und anschließend eine Gradierung der Hohlkugelstrukturen erfolgt. Diese mit dieser Erfindung vorgeschlagene Gradierung kann dadurch ermöglicht werden, dass man die Tatsache ausnutzt, dass die Hohlkugelstrukturen tendenziell leichter sind und damit in einem Schlickersystem bevorzugt aufschwimmen werden.

Dies geschieht aber nicht ohne weiteres Zutun. Es ist daher zweckmäßig, wenn die Gradierung der Hohlkugelstrukturen durch Vibration erfolgt und zwar bei bestimmten Frequenzen und über geeignete Zeiten.

Wenn der Feuerfestformkörper ein Hitzeschildelement mit einer Heißseite und einer der Heißseite gegenüberliegenden Kaltseite ist, ist es weiterhin zweckmäßig, wenn der erste Werkstoff im Bereich der Heißseite eingefüllt wird, d.h. das Hitzeschildelement wird liegend hergestellt, so dass die Hohlkugelkorunde prinzipiell zur Heißgasseite aufschwimmen können, wodurch die schwereren Partikel zur Kaltgasseite des keramischen Hitzeschildes absinken. Dadurch wird eine gewollte Gradierung im keramischen Hitzeschild erreicht, die die Hohlkugelkorunde mit der besseren Isolation und Thermoschockstabilität auf der Heißgasseite und die feineren und festeren Partikel auf die Kaltgasseite des keramischen Hitzeschildes anreichern. Bei einem derartigen Verfahren müsste allerdings der Anguss auf der Oberseite des Gussteils, d.h. auf der Heißseite des Hitzeschildelements nachgearbeitet werden.

In einem alternativen Verfahren zum Herstellen eines Feuerfestformkörpers, wird eine Gussform durch ein herausziehbares Schwert (Trennfläche) in zwei Kammern aufgeteilt und ein erster Werkstoff mit Hohlkugelstrukturen und eine zweiter Werkstoff ohne Hohlkugelstrukturen werden getrennt in je eine der Kammern eingefüllt und anschließend wird das Schwert herausgezogen. Man nutzt hier die vergleichsweise hohe Grundviskosität der Werkstoffe, die nach Entfernen des Schwerts auf ihrer jeweils zugedachten Position verbleiben und sich lediglich wie gewünscht miteinander verklammern.

Die Erfindung wird beispielhaft anhand der Zeichnungen näher erläutert. Es zeigen schematisch und nicht maßstäblich:
- Figur 1: einen erfindungsgemäßen Feuerfestformkörper in einer schematischen Darstellung,
- Figur 2: eine Gussform für die Herstellung des erfindungsgemäßen Feuerfestformkörpers,
- Figur 3: eine weitere Gussform für die Herstellung des erfindungsgemäßen Feuerfestformkörpers und
- Figur 4: ein Ablaufdiagramm für das erfinderische Verfahren zum Herstellen eines Feuerfestformkörpers.

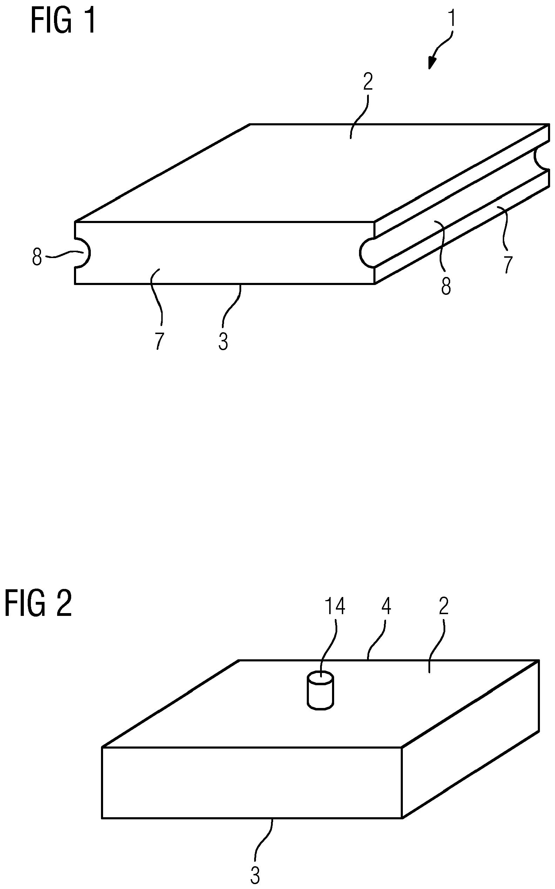

Die Figur 1 zeigt schematisch und beispielhaft ein Hitzeschildelement für eine Gasturbinenbrennkammer als ein Ausführungsbeispiel für einen erfindungsgemäßen Feuerfestformkörper. Das in Figur 1 dargestellte Hitzeschildelement 1 weist eine Heißseite 2, die einem Brennkammerinneren zuzuwenden ist, und eine der Heißseite 2 gegenüberliegende Kaltseite 3, die der Tragstruktur der Brennkammer zuzuwenden ist, sowie vier die Heißseite 2 mit der Kaltseite 3 verbindende Umfangsseiten 7. In zwei der Umfangsseiten 7 sind Nuten 8 vorhanden, die den Eingriff einer das Hitzeschildelement 1 an der Tragstruktur haltenden Halteklammer ermöglichen. Andere Haltemöglichkeiten können natürlich auch zu Anwendung kommen, bei denen die Nuten 8 nicht notwendig sind. Beispielsweise kann die Kaltseite 3 des Hitzeschildelementes 1 mit der Tragstruktur verschraubt werden.

Die Figur 2 zeigt eine Gussform 4 für die Herstellung des erfindungsgemäßen Feuerfestformköpers 1 gemäß dem erfindungsgemäßen Verfahren, bei dem ein erster Werkstoff mit keramischen Hohlkugelstrukturen in die Gussform 4 eingefüllt wird und anschließend eine Gradierung der Hohlkugelstrukturen erfolgt. Das Einfüllen des ersten Werkstoffs erfolgt dabei auf der Heißseite 2 des Feuerfestformkörpers 1.

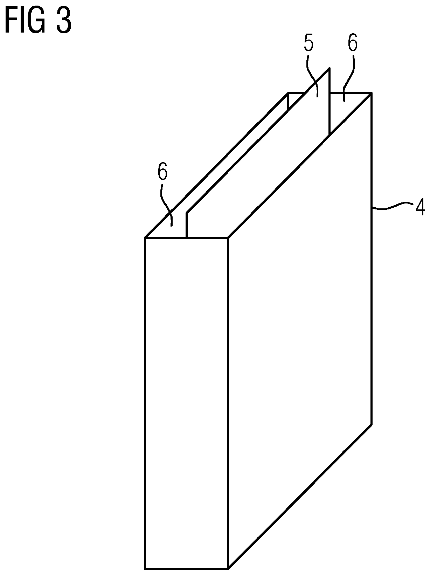

In Figur 3 ist die Gussform 4 ist durch ein herausziehbares Schwert 5 so in zwei Kammern 6 aufgeteilt, dass für Heißseite 2 und Kaltseite 3 des Feuerfestformkörpers 1 verschiedene Werkstoffe eingefüllt (z.B. vergossen) werden können.

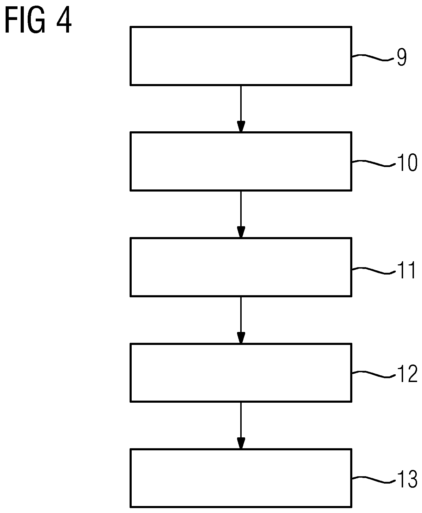

Ein Verfahren zum Herstellen des in Figur 1 dargestellten Hitzeschildelements wird anhand von Figur 4 in einem schematischen Ablaufdiagramm dargestellt und beschrieben. Zu Beginn des Verfahrens wird ein erster Werkstoff bereitgestellt, der Hohlkugelstrukturen aufweist (Schritt 9).

Es kommen verschiedene Formgebungsverfahren in Betracht. Gemäß der Erfindung wird eine Gussform bereitgestellt (Schritt 10), die an der späteren Heißseite des Feuerfestformkörpers eine Öffnung 14 aufweist, wobei diese Öffnung 14 beim Gießen nach oben weist.

In diese Öffnung 14 wird der erste Werkstoff eingefüllt. (Schritt 11).

Durch Vibration wird die Gradierung im ersten Werkstoff eingestellt. (Schritt 12)

Anschließend wird der Feuerfestformkörper 1 (bei Temperaturen bevorzugt oberhalb 1.550°C) gesintert (Schritt 13).

Alternativ kann eine Gussform 4 bereitgestellt und durch ein Schwert 5 in zwei Kammern 6 aufgeteilt werden. Dann werden der erste Werkstoff mit Hohlkugelstrukturen und der zweite Werkstoff ohne Hohlkugelstrukturen getrennt in je eine der Kammern 6 eingefüllt. Schließlich wird das Schwert 5 herausgezogen und danach der Feuerfestformkörper 1, wie bereits beschrieben gesintert.

## Patentansprüche

1. Feuerfestformkörper (1) mit einer Heißseite (2) und einer der Heißseite (2) gegenüberliegenden Kaltseite (3), **dadurch gekennzeichnet, dass** der Feuerfestformkörper (1) einen ersten Werkstoff mit keramischen Hohlkugelstrukturen umfasst, wobei eine Menge von Hohlkugelstrukturen von der Heißseite (2) zur Kaltseite (3) abnimmt.

2. Feuerfestformkörper (1) nach Anspruch 1, wobei der Feuerfestformkörper aus einem Werkstoff mit keramischen Hohlkugelstrukturen besteht.

3. Feuerfestformkörper (1) nach Anspruch 1, wobei der Feuerfestformkörper (1) neben dem ersten Werkstoff mit keramischen Hohlkugelstrukturen einen zweiten Werkstoff mit gesinterten Strukturen umfasst, wobei sich erster und zweiter Werkstoff dadurch unterscheiden, dass ein gesinterter Rohstoff einer Partikelgröße im zweiten Werkstoff durch einen Rohstoff mit Hohlkugelstrukturen der gleichen Partikelgröße und der gleichen Partikelgrößenverteilung im ersten Werkstoff ersetzt ist.

4. Feuerfestformkörper (1) nach Anspruch 3, wobei die übrigen Rohstoffe der ersten und zweiten Werkstoffe übereinstimmen.

5. Feuerfestformkörper (1) nach einem der vorhergehenden Ansprüche, wobei die Hohlkugelstrukturen vor einem Vergießen zum Feuerfestformkörper (1) zumindest teilweise zerbrochen sein können.

6. Feuerfestformkörper (1) nach einem der vorhergehenden Ansprüche, wobei die Hohlkugelstrukturen Hohlkugelkorund umfassen.

7. Feuerfestformkörper (1) nach einem der Ansprüche 3 oder 4, wobei die gesinterten Strukturen Sinterkorund umfassen.

8. Feuerfestformkörper (1) nach Anspruch 7, bei dem der Gewichtsanteil von Sinterkorund im zweiten Werkstoff 30% der festen Bestandteile des zweiten Werkstoffs übersteigt.

9. Verfahren zum Herstellen eines Feuerfestformkörpers (1), bei dem ein erster Werkstoff mit keramischen Hohlkugelstrukturen in eine Gussform (4) eingefüllt wird und anschließend eine Gradierung der Hohlkugelstrukturen erfolgt.

10. Verfahren nach Anspruch 9, wobei die Gradierung der Hohlkugelstrukturen durch Vibration erfolgt.

11. Verfahren nach einem der Ansprüche 9 oder 10, wobei der Feuerfestformkörper (1) ein Hitzeschildelement mit einer Heißseite (2) und einer der Heißseite (2) gegenüberliegenden Kaltseite (3) ist und der erste Werkstoff im Bereich der Heißseite (2) eingefüllt wird.

## Claims

1. Refractory molding (1) with a hot side (2) and a cold side (3) opposite from the hot side (2), **characterized in that** the refractory molding (1) comprises a first material with ceramic hollow sphere structures, an amount of hollow sphere structures decreasing from the hot side (2) to the cold side (3) .

2. Refractory molding (1) according to Claim 1, the refractory molding consisting of a material with ceramic hollow sphere structures.

3. Refractory molding (1) according to Claim 1, the refractory molding (1) comprising in addition to the first material with ceramic hollow sphere structures a second material with sintered structures, the first material and the second material differing in that a sintered raw material of one particle size in the second material is replaced in the first material by a raw material with hollow sphere structures of the same particle size and the same particle size distribution.

4. Refractory molding (1) according to Claim 3, the other raw materials of the first and second materials being the same.

5. Refractory molding (1) according to one of the preceding claims, the hollow sphere structures being at least partially broken before casting to form the refractory molding (1).

6. Refractory molding (1) according to one of the preceding claims, the hollow sphere structures comprising hollow corundum spheres.

7. Refractory molding (1) according to either of Claims 3 and 4, the sintered structures comprising sintered corundum.

8. Refractory molding (1) according to Claim 7, in which the proportion by weight of sintered corundum in the second material exceeds 30% by weight of the solid constituents of the second material.

9. Method for producing a refractory molding (1), in which a first material with ceramic hollow sphere structures is introduced into a casting mold (4) and a grading of the hollow sphere structures is subsequently performed.

10. Method according to Claim 9, the grading of the hollow sphere structures being performed by vibration.

11. Method according to either of Claims 9 and 10, the refractory molding (1) being a heat shield element with a hot side (2) and a cold side (3) opposite from the hot side (2) and the first material being introduced in the region of the hot side (2).

## Revendications

1. Pièce (1) moulée réfractaire ayant un côté (2) chaud et un côté (3) froid opposé au côté (2) chaud, **caractérisé en ce que** la pièce (1) moulée réfractaire comprend un premier matériau ayant des structures céramiques de bille creuse, une quantité de structures de bille creuse diminuant du côté (2) chaud au côté (3) froid.

2. Pièce (1) moulée réfractaire suivant la revendication 1, dans laquelle la pièce (1) moulée réfractaire est en un matériau ayant des structures céramiques de bille creuse.

3. Pièce (1) moulée réfractaire suivant la revendication 1, dans laquelle la pièce (1) moulée réfractaire comprend, outre le premier matériau ayant des structures céramiques de bille creuse, un deuxième matériau ayant des structures frittées, le premier et le deuxième matériaux se distinguant par le fait qu'une matière brute frittée d'une dimension de particule dans le deuxième matériau est remplacée dans le premier matériau par une matière brute ayant des structures de bille creuse de la même dimension de particule et de la même répartition de dimension de particule.

4. Pièce (1) moulée réfractaire suivant la revendication 3, dans laquelle les autres matières brutes du premier et du deuxième matériaux coïncident.

5. Pièce (1) moulée réfractaire suivant l'une des revendications précédentes, dans laquelle les structures de bille creuse peuvent être brisées, au moins en partie, avant une coulée en la pièce (1) moulée réfractaire.

6. Pièce (1) moulée réfractaire suivant l'une des revendications précédentes, dans laquelle les structures de bille creuse comprennent du corindon en bille creuse.

7. Pièce (1) moulée réfractaire suivant l'une des revendications 3 ou 4, dans laquelle les structures frittées comprennent du corindon fritté.

8. Pièce (1) moulée réfractaire suivant la revendication 7, dans laquelle la proportion en poids de corindon fritté dans le deuxième matériau dépasse 30% des constituants solides du deuxième matériau.

9. Procédé de production d'une pièce (1) moulée réfractaire dans lequel on remplit un moule (4) de coulée d'un premier matériau ayant des structures céramiques de bille creuse et on effectue enfin une gradation des structures de bille creuse.

10. Procédé suivant la revendication 9, dans lequel la gradation des structures de bille creuse s'effectue par vibration.

11. Procédé suivant l'une des revendications 9 ou 10, dans lequel la pièce (1) moulée réfractaire est un élément de bouclier thermique ayant un côté (2) chaud et un côté (3) froid opposé au côté (2) chaud et on met le premier matériau dans la région du côté (2) chaud.
